# EUROPEAN PATENT SPECIFICATION

(11) **EP 1 703 758 B1**
(45) Date of publication and mention of the grant of the patent: **17.05.2017**
(21) Application number: 05290615.3
(22) Date of filing: 18.03.2005
(51) Int. Cl.: H04W 64/00, H04W 4/22, H04W 76/00

(54) **PROVISION OF LOCATION INFORMATION RELATING TO AN EMERGENCY CALL**
BEREITSTELLUNG VON ORTUNGSINFORMATIONEN BEZÜGLICH EINES NOTRUFES
MISE À DISPOSITION DES INFORMATIONS DE LOCALISATION SE RÉFÉRANT À UN APPEL D'URGENCE

(43) Date of publication of application: 20.09.2006
(73) Proprietor: ALCATEL LUCENT, 92100 Boulogne-Billancourt (FR)
(72) Inventor: Oberle, Karsten, 68199 Mannheim (DE); Domschitz, Peter, 70191 Stuttgart (DE); Kessler, Marcus, 70329 Stuttgart (DE); Tomsu, Marco, 71254 Ditzingen (DE)
(74) Representative: Berthier, Karine

(56) References cited:
- WO-A-99/62284
- WO-A-02/078382
- US-A1- 2002 016 173
- US-A1- 2004 160 909
- US-B1- 6 542 819

## Description

The invention relates to a method for providing location information relating to an emergency call according to the preamble of claim 1, a telecommunications terminal according to the preamble of claim 5, a server according to the preamble of claim 6 and a computer program product.

In conventional fixed telecommunications networks the location of a caller can be directly matched with his telephone number. Nevertheless this possibility is not used when the origin of an emergency call is to be locally determined. One of the famous 5 Ws (Who, What, Why, When, Where) every addressee of an emergency call will ask, is the question "where" the caller is.

But there exist some kinds of emergency notifications that are not given by human beings but by apparatuses. Conventional apparatus for giving fire alarms are fixed apparatuses and have the only purpose of giving fire alarms. So there is a fixed assignment between either of these apparatuses and the place of origin of a fire alarm.

Nowadays cars often have any kind of on-board unit for guiding the driver or for discounting tolls. Such on-board units on the one hand have knowledge about the location where they are and where the car is and on the other hand often have access to the public telecommunications network.

It is already known that such on-board units have the possibility to send an alarm in case of an accident and, including in the alarm message to notify the actual location.

It is also known, e.g. from the article "Enhancing SIP with spatial location for emergency call services" by Jose Costa-Requena and Haitao Tang in "Proceedings Tenth International Conference on Computer Communications and Networks" p. 326 - 333 from Scottsdale, AZ, USA, 15 - 17 Oct 2001 to provide spatial location information as payload of the session initiation protocol (SIP) in future SIP telephony.

Further it is known how to come to such spatial location information. The above-cited article mentions GPS (Global Positioning System), Location Information Service, Local Positioning systems, radio cell information or a triangulation mechanism. It also deals with user inputs like "I am sitting in a terrace on the second floor of Eiffel Tower".

US 6,542,819 B1 describes a technique for the determination of the current position of a mobile device based on a plurality of geolocation positioning services. There different position information sources are accessed wirelessly to acquire position information. At least one of the plurality of accessed position information sources is selected depending on the values of operation parameters, such as for example availability, cost, speed, power consumption and quality of the position information.

US 2004/0160909 A1 discloses techniques for providing an indication of local service availability and the quality of available location services for a mobile station. A required location quality of service parameter is acquired. The required location quality of service parameter may be a minimum position accuracy value, a maximum response time value, or a maximum age of position information value.

WO 02/078382 A1 describes devices and methods for positioning mobile communication units. There a solution is concerned for the collaborative positioning with the aid of short-range communication between positioning communication units, whereby one communication unit exploits positioning information from a number of communication units and combines the information in an advantageous manner such that resulting positioning information with improved precision is obtained.

US 2004/008 11 39 discloses a method for providing location information relating to an emergency call.

On-board units often work together with GPS and from there know the actual position in terms of geographical coordinates (latitude, longitude and altitude). But they also work with street names and house numbers.

So there is sometimes the situation that an emergency call should be sent, where the actual location is to be included, but there is more than one possibility of giving such information whereas there is no form of such information that is present in each and every situation.

The problem underlying the invention is to provide location information relating to an emergency call when there exists or at least it is not excluded that there exists differing location information.

According to the invention this problem is solved by a method according to the teachings of claim 1, a telecommunications terminal according to the teachings of claim 5, a server according to the teachings of claim 6 and a computer program product according to the teachings of claim 7.

This means that there is made a weighting of any available location information and that the location information with the highest ranking is used.

Further embodiments of the invention are to be found in the subclaims and in the following description.

In the following the invention will be described in more details with the use of the drawing:
- Figure 1: shows a system for applying the method according to the invention, with a telecommunications terminal according to the invention and a server according to the invention.
- Figure 2: shows a table that can be used when applying the method according to the invention.

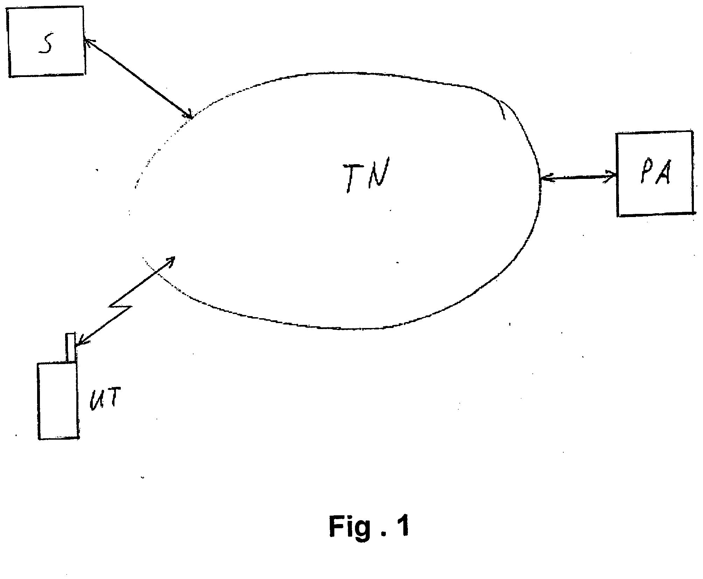

On the basis of Fig. 1 first a system is being described wherein the method according to the invention can be applied.

Fig. 1 shows a telecommunications network TN, a server S, a users terminal UT, and an equipment PA of a public authority, to which emergency calls are to be directed.

Server S, users terminal UT, and equipment PA are connected to the telecommunications network TN.

The connection between the users terminal UT and the telecommunications network TN is drawn with a symbol meaning that it is a radio link. This shows that the users terminal UT is a mobile one where the location thereof is not fixed. This location of coarse should be within the area assigned to the telecommunications network. The kind of the other connections is of no relevance here.

The location of the user's terminal UT can be known in different forms:
Normally it is known, in which cell of-a cellular network the terminal is located. Such information is a very coarse one, but it is a very actual one. But firemen, policemen or the like normally do not know the boarders of a cellular network. And even then this would not be good information.

It is known to determine a mobile users terminal's location by means of triangulation. This can be done by measuring angles with directional antennas or by measuring propagation delays. Such information is more precise, but not always available and not necessarily very actual.

A very precise form of location information is that of a GPS. At the user terminals' side such information is always actual when the users terminal UT is equipped with GPS. Often such location information also is translated from geographical coordinates to data including district in town, street name and house number.

Location information input by the user could be very precise. But this depends on the knowledge of a place of the user and on the way he uses to express his knowledge. Furthermore a human user will not continuously update his input. So maybe such input is not actual. Such input could be stored as spoken speech or it could be translated from speech to text and stored and forwarded in this form. It also could be text input via a keyboard.

Insofar this is very well known. But when one has more than one possibility, the question is, which to use.

The invention here proposes to make a weighting of any available location information and to take that location information with the highest ranking for further use.

Such weighting can be made either within the user's terminal UT itself or within a server S. Such server S could be the server of the provider of the cellular network or an independent operator providing such service. It also could belong to a political organization, like the public authority, to which emergency calls are to be directed.

Depending on the location, where such weighting is made, different forms of location information are available directly, but others can be reached via the network.

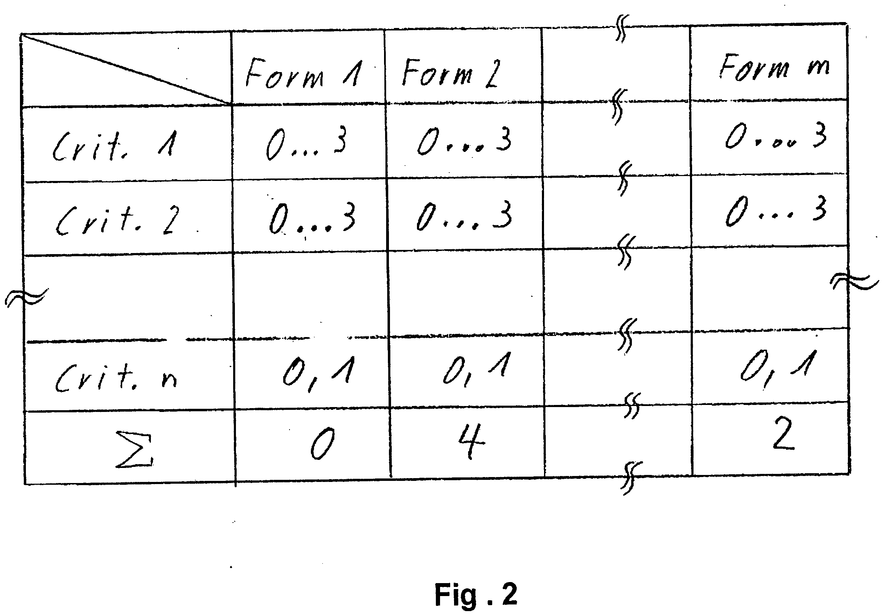

A good means to carry out such weighting is the use of a table, as shown by way of example in Fig. 2.

Fig. 2 shows a table including columns headed Form 1, Form 2, ..., Form m and rows headed Crit. 1, Crit. 2, ..., Crit. n. A last row carries as header the sign "Sigma" for a sum.

The columns represent different forms of location information. All rows but the last one contain weights for different criteria.

Form 1 may be information consisting of street name and house number based on GPS, Form 2 may be the result of a triangulation, and Form m may be a spoken text.

The first criterion, Crit. 1, may be based on the age of the location information, thus Crit. 1 constitutes an age identifier. Here the possible values reach from 0 to 3, where 0 is assigned to old information, and 3 is assigned to fresh information.

The second criterion, Crit. 2, may be based on the type of origin of the respective unit of location information, thus Crit. 1 constitutes a type identifier. Here the possible values reach from 0 to 3, where 0 is assigned to rough information like that of the cell designation, and 3 is assigned for precise information like that of GPS.

The last criterion, Crit. n, may be based on the kind of coordinates, in which the location information is given. A 1 is assigned, when the "coordinates" consist of street name and house number, a 0 is assigned in all other cases.

In the example of Fig. 2 the location information in "Form 2" has the highest rank or sum of all weights, namely 4. It may be the sum of a 2 for triangulation, a 1 for the fact, that the measuring took place already during call setup and another 1 for the result being in the "coordinates" street name and house number.

Instead of using a table as the kernel of a weighting unit of coarse other possibilities can be used. To find out the form with the highest ranking is a particular case of sorting. And there are lots of sorting routines known in the art.

If there is the possibility of including more than one form of location information into an emergency call, it is supposed to use the form with the highest rank as some kind of main form and to add at least one other form as additional information. In an emergency situation every additional information will be welcome.

As already mentioned such preparation of location information for an emergency call can be can be done both, at the telecommunications terminal or through a server.

Of coarse such telecommunications terminal needs a transmitter for sending an emergency call message into the telecommunications network TN. For normal telecommunications terminals this is self-evident, but not for on-board units where the main purpose is to communicate with a toll collect system. This terminal can gather location information either with own means like GPS, keyboard or microphone or can receive such information from the network operator in the form of cell designation or triangulation result on request or during call setup. Also a recall from a server could bring the telecommunications terminal in position to have all relevant information to itself send the emergency call.

If a server is using the invention, it needs to get some kind of trigger from a telecommunications terminal. Such trigger can include forwarding location information the telecommunications terminal already possesses. The server now can obtain additional location information from the network side. The server either can prepare the location information and send it to the telecommunications terminal or directly can send an emergency call to the equipment PA of the public authority.

Of coarse both, a telecommunications network or a server would do the necessary steps according by means of software. Such software, especially for a server, could be delivered in the form of a computer program product.

## Claims

1. A method for providing location information relating to an emergency call, **characterized in, that** when there exists differing location information (Form 1, Form 2, ..., Form m), a weighting is made of any available location information, that the location information (Form 2) with the highest ranking is provided for further use, and that to at least one unit of location information an age identifier (Crit. 1) is adhered to.

2. The method according to claim 1, **characterized in, that** location information other than that with the highest ranking is made available, too.

3. The method according to claim 1, **characterized in, that** to at least one unit of location information a type identifier (Crit. 2) is adhered to that identifies a type of origin of said unit of location information.

4. The method according to claim 1, **characterized in, that** the weighting is made by means of a table (Fig. 2) that faces different criteria (Crit. 1, Crit. 2, ..., Crit. n) to different forms of the location information (Form 1, Form 2, ..., Form m).

5. A telecommunications terminal (UT) with a transmitter for sending an emergency call message, **characterized in, that** it includes a weighting unit for ranking differing location information (Form 1, Form 2, ..., Form m), where to at least one unit of location information an age identifier (Crit. 1) is adhered to, and an output for providing the location information (Form 2) with the highest ranking.

6. A server (S) for providing location information relating to an emergency call, **characterized in, that** it includes a weighting unit for ranking differing location information (Form 1, Form 2, ..., Form m), where to at least one unit of location information an age identifier (Crit. 1) is adhered to, and an output for providing the location information (Form 2) with the highest ranking.

7. A computer program product for providing location information relating to an emergency call which, when loaded into a server including a weighting unit for ranking differing location information (Form 1, Form 2, ..., Form m), where to at least one unit of location information an age identifier (Crit. 1) is adhered to, and an output for providing the location information (Form 2) with the highest ranking runs the method of weighting of any available location information (Form 1, Form 2, ..., Form m) and providing for further use the location information (Form 2) with the highest ranking.

## Patentansprüche

1. Verfahren für das Bereitstellen von Standortinformationen im Zusammenhang mit einem Notruf, **dadurch gekennzeichnet, dass** beim Vorliegen abweichender Standortinformationen (Form 1, Form 2, ..., Form m) eine Gewichtung aller verfügbaren Standortinformationen vorgenommen wird, dass die Standortinformation (Form 2) mit der höchsten Einstufung für die weitere Verwendung zur Verfügung gestellt wird und dass an mindestens eine Einheit von Standortinformationen eine Alterskennung (Crit. 1) angefügt wird.

2. Das Verfahren nach Anspruch 1, **dadurch gekennzeichnet, dass** auch die Standortinformationen verfügbar gemacht werden, die nicht die höchste Einstufung haben.

3. Das Verfahren nach Anspruch 1, **dadurch gekennzeichnet, dass** an mindestens eine Einheit von Standortinformationen eine Typenkennung (Crit. 2) angefügt wird, welche einen Typ von Ursprung der besagen Einheit von Standortinformationen identifiziert.

4. Das Verfahren nach Anspruch 1, **dadurch gekennzeichnet, dass** die Gewichtung anhand einer Tabelle (Fig. 2) erfolgt, die verschiedene Kriterien (Crit. 1, Crit. 2, ..., Crit. n) verschiedenen Formen der Standortinformationen (Form 1, Form 2, ..., Form m) gegenüberstellt.

5. Telekommunikationsterminal (UT) mit einem Sender zum Senden einer Notrufmeldung, **dadurch gekennzeichnet, dass** es eine Gewichtungseinheit zum Einstufen verschiedener Standortinformationen (Form 1, Form 2, ..., Form m) umfasst, wobei an mindestens eine Einheit von Standortinformationen eine Alterskennung (Crit. 1) angefügt wird, und dass es weiterhin einen Ausgang umfasst, um die Standortinformation (Form 2) mit der höchsten Einstufung zur Verfügung zu stellen.

6. Server (S) zum Verfügbarmachen von Standortinformationen bezüglich einer Notrufmeldung, **dadurch gekennzeichnet, dass** er eine Gewichtungseinheit zum Einstufen verschiedener Standortinformationen (Form 1, Form 2, ..., Form m) umfasst, wobei an mindestens eine Einheit von Standortinformationen eine Alterskennung (Crit. 1) angefügt wird, und dass er weiterhin einen Ausgang umfasst, um die Standortinformation (Form 2) mit der höchsten Einstufung zur Verfügung zu stellen.

7. Computerprogramm-Produkt zum Verfügbarmachen von Standortinformationen bezüglich einer Notrufmeldung, welches, wenn es auf einem Server geladen wird, eine Gewichtungseinheit zum Einstufen verschiedener Standortinformationen (Form 1, Form 2, ..., Form m) umfasst, wobei an mindestens eine Einheit von Standortinformationen eine Alterskennung (Crit. 1) angefügt wird, und wobei ein Ausgang für das Verfügbarmachen der Standortinformation (Form 2) mit der höchsten Einstufung ein Verfahren zur Gewichtung jeglicher verfügbarer Standortinformationen (Form 1, Form 2, ..., Form m) ausführt und zur weiteren Verwendung die Standortinformation (Form 2) mit der höchsten Einstufung zur Verfügung stellt.

## Revendications

1. Procédé pour fournir des informations de localisation relatives à un appel d'urgence, **caractérisé en ce que**, lorsqu'il existe des informations de localisation différentes (Form 1, Form 2, ..., Form m), une pondération est effectuée de toute information de localisation disponible, selon laquelle les informations de localisation (Form 2) avec le classement le plus élevé sont fournies pour une utilisation ultérieure, et selon laquelle, un identificateur d'âge (Crit. 1) est fait adhérer à au moins une unité d'informations de localisation.

2. Procédé selon la revendication 1, **caractérisé en ce que** des informations de localisation autres que celles avec le classement le plus élevé sont également mises à disposition.

3. Procédé selon la revendication 1, **caractérisé en ce qu'**un identificateur de type (Crit. 2) qui identifie un type d'origine de ladite unité d'informations de localisation est fait adhérer à au moins une unité d'informations de localisation.

4. Procédé selon la revendication 1, **caractérisé en ce que** la pondération est effectuée au moyen d'une table (Fig. 2) qui confronte différents critères (Crit. 1, Crit. 2, ..., Crit. n) et différentes formes des informations de localisation (Form 1, Form 2, ..., Form m).

5. Terminal de télécommunication (UT) avec un émetteur pour envoyer un message d'appel d'urgence, **caractérisé en ce qu'**il inclut une unité de pondération pour classer des informations de localisation différentes (Form 1, Form 2, ..., Form m), où un identificateur d'âge (Crit. 1) est fait adhérer à au moins une unité d'informations de localisation, et une sortie pour fournir les informations de localisation (Form 2) avec le classement le plus élevé.

6. Serveur (S) pour fournir des informations de localisation relatives à un appel d'urgence, **caractérisé en ce qu'**il inclut une unité de pondération pour classer des informations de localisation différentes (Form 1, Form 2, ..., Form m), où un identificateur d'âge (Crit. 1) est fait adhérer à au moins une unité d'informations de localisation, et une sortie pour fournir les informations de localisation (Form 2) avec le classement le plus élevé.

7. Produit de programme informatique pour fournir des informations de localisation relatives à un appel d'urgence qui, lorsqu'il est chargé dans un serveur incluant une unité de pondération pour classer des informations de localisation différentes (Form 1, Form 2, ..., Form m), où un identificateur d'âge (Crit. 1) est fait adhérer à au moins une unité d'informations de localisation, et une sortie pour fournir les informations de localisation (Form 2) avec le classement le plus élevé exécute le procédé de pondération de toute information de localisation disponible (Form 1, Form 2, ..., Form m) et de fourniture, pour une utilisation ultérieure, des informations de localisation (Form 2) avec le classement le plus élevé.
